# EUROPÄISCHE PATENTANMELDUNG

(11) **EP 4 390 170 A1**
(43) Veröffentlichungstag der Anmeldung: **26.06.2024**
(21) Anmeldenummer: 23205778.6
(22) Anmeldetag: 25.10.2023
(51) Int. Cl.: F16D 41/36

(54) **FREILAUF EINES FAHRZEUGS**

(30) Priorität: 22.12.2022 DE 102022214307
(71) Anmelder: Robert Bosch GmbH, 70442 Stuttgart (DE)
(72) Erfinder: Zimmermann, Christoph, 72147 Nehren (DE); Braun, Sigmund, 72127 Kusterdingen (DE)

(57) **Zusammenfassung**

Die Erfindung betrifft einen Freilauf eines Fahrzeugs (100), insbesondere eines Zweirads, umfassend eine Kurbelwelle (2), eine Abtriebswelle (3), welche eine erste Verzahnung (11) aufweist, ein Freilaufelement (4), welches eine zweite Verzahnung (12) aufweist, und ein Reibelement (5), wobei die erste Verzahnung (11) und die zweite Verzahnung (12) eingerichtet sind, um bei einem Eingriff ineinander eine Drehmomentübertragung zwischen der Abtriebswelle (3) und dem Freilaufelement (4) zu bewirken, wobei das Freilaufelement (4) in axialer Richtung verschiebbar auf der Kurbelwelle (2) angeordnet ist, wobei das Freilaufelement (4) in Umfangsrichtung unverdrehbar relativ zur Kurbelwelle (2) angeordnet ist, und wobei das Freilaufelement (4) und das Reibelement (5) mittels eines Wendelmechanismus (6) miteinander verbunden sind, welcher eingerichtet ist, um bei einer relativen Rotation von Freilaufelement (4) und Reibelement (5) zueinander eine translatorische Verschiebung von Freilaufelement (4) und Reibelement (5) relativ zueinander zu bewirken.

## Beschreibung

### Stand der Technik

Die vorliegende Erfindung betrifft einen Freilauf eines Fahrzeugs, sowie ein Fahrzeug.

In Fahrzeugen, beispielsweise Elektrofahrrädern, sind bisher Freiläufe bekannt, welche dazu eingerichtet sind, eine Verbindung zwischen einer angetriebenen Abtriebswelle und einem Motorgetriebe, welches mit dem Antriebsmotor verbunden ist, zu unterbrechen, wenn die angetriebene Abtriebswelle bezüglich der vorwärts gerichteten Drehrichtung schneller läuft als ein Ausgang des Motorgetriebes, das heißt in derjenigen Drehrichtung, welche einen Antrieb des Fahrzeugs in vorwärts gerichteter Fahrtrichtung verursacht. Häufig erfolgt die Betätigung des Freilaufs dabei über eine Verzahnung. Bekannt ist beispielsweise ein federbelastetes Einrücken einer solchen Verzahnung, wobei das Aufheben der Drehmomentübertragung in Freilaufrichtung beispielsweise durch aneinander abgleitende Zähne einer Sägezahn-Verzahnung umgesetzt wird.

### Offenbarung der Erfindung

Der erfindungsgemäße Freilauf mit den Merkmalen des Anspruchs 1 zeichnet sich demgegenüber durch eine besonders vorteilhafte Konstruktion aus, die neben einer hohen Robustheit besonders verschleißarm und geräuscharm funktioniert. Dies wird erfindungsgemäß erreicht durch einen Freilauf eines Fahrzeugs, vorzugsweise eines Zweirads, besonders bevorzugt eines Elektrofahrrads, umfassend eine Kurbelwelle, eine Abtriebswelle, ein Freilaufelement, und ein Reibelement. Insbesondere sind die Kurbelwelle und die Abtriebswelle parallel zueinander, besonders bevorzugt koaxial zueinander, angeordnet. Die Abtriebswelle weist dabei eine erste Verzahnung, insbesondere eine Stirnverzahnung, auf, und das Freilaufelement weist eine zweite Verzahnung, insbesondere eine Stirnverzahnung, auf. Die erste Verzahnung und die zweite Verzahnung sind dabei eingerichtet, um bei einem Eingriff ineinander eine Drehmomentübertragung zwischen der Abtriebswelle und dem Freilaufelement zu bewirken. Dabei können im Rahmen der vorliegenden Erfindung auch anstelle von Zähnen bzw. Zahnkränzen andere geometrische Formen von Formschlusselementen zum Einsatz kommen, welche bei einem Eingriff eine Drehmomentübertragung zwischen der Abtriebswelle und dem Freilaufelement bewirken. Unter "Verzahnung" sind also im Rahmen der vorliegenden Erfindung Formschlusselemente zu verstehen, welche bei einem Eingriff eine Drehmomentübertragung zwischen der Abtriebswelle und dem Freilaufelement bewirken. Das Freilaufelement ist in axialer Richtung verschiebbar auf der Kurbelwelle angeordnet. Zudem ist das Freilaufelement in Umfangsrichtung unverdrehbar relativ zur Kurbelwelle auf der Kurbelwelle angeordnet. Das Freilaufelement und das Reibelement sind mittels eines Wendelmechanismus miteinander gekoppelt. Der Wendelmechanismus ist dabei eingerichtet, um bei einer relativen Rotation von Freilaufelement und Reibelement zueinander eine translatorische Verschiebung von Freilaufelement und Reibelement relativ zueinander zu bewirken.

Mit anderen Worten wird eine Freilauffunktion dadurch bereitgestellt, dass über einen mittels Reibschluss betätigbaren Wendelmechanismus ein Einrücken und Ausrücken der Verzahnungen umgesetzt wird. Das heißt, durch die spezielle Ausgestaltung des Freilaufs wird eine relative Rotation von Kurbelwelle und Abtriebswelle über den Kraftschluss am Reibelement in eine relative Rotation von Reibelement und Freilaufelement umgesetzt. Der Wendelmechanismus bewirkt dabei, dass das Freilaufelement in axialer Richtung auf der Kurbelwelle verschoben wird, und damit insbesondere von der ersten Verzahnung der Abtriebswelle weg oder zu dieser hin verschoben wird, um den Zahneingriff entweder auszurücken oder einzurücken.

Der Wendelmechanismus kann dabei vielfältig ausgebildet sein. Beispielsweise können ineinandergreifende Helix-förmige Elemente am Freilaufelement und/oder Reibelement vorgesehen sein. Weiterhin können beliebige andere ineinandergreifende Elemente am Reibelement und Freilaufelement angeordnet sein, beispielsweise ähnlich einer Kulissenführung, die so ausgestaltet sind, um die relative Rotation in eine relative translatorische Verschiebung entlang der Achse zu überführen.

Der Freilauf bietet dabei den Vorteil, dass mit einer besonders einfachen und kostengünstigen Konstruktion eine besonders zuverlässige und robuste Funktion des Freilaufs ermöglicht werden kann, welche zudem vorteilhafte Eigenschaften hinsichtlich Verschleiß und Geräuschentwicklung hat. Im Detail können beispielsweise sämtliche an der Funktion beteiligten Elemente mechanisch besonders robust ausgestaltet und derart ausgebildet sein, dass zuverlässig Fehlfunktionen durch die direkte mechanische Kopplung in sämtliche Bewegungs-bzw. Betätigungsrichtungen des Freilaufs, vermieden werden können. Da zudem beispielsweise durch den Wendelmechanismus das Einrücken bzw. Ausrücken des Verzahnungseingriffs besonders gezielt und insbesondere gezwungen umgesetzt wird, kann somit ein unerwünschtes Abgleiten der Verzahnungen beispielsweise über einen längeren Zeitraum vermieden werden, wodurch einerseits Geräusche vermieden werden, und andererseits ein niedriger Verschleiß sichergestellt werden kann. Zudem kann der Zahneingriff dabei besonders robust und zuverlässig greifend ausgeführt werden.

Die Unteransprüche haben bevorzugte Weiterbildungen der Erfindung zum Inhalt.

Bevorzugt umfasst der Wendelmechanismus ein Gewinde. Das heißt, zwischen Freilaufelement und Reibelement ist ein Gewinde ausgebildet, das die entsprechende Funktion der translatorischen Verschiebung bei relativer Rotation zueinander bewirkt. Damit kann auf besonders einfache und kostengünstige Weise und besonders zuverlässig die gewünschte Kinematik der Kopplung zwischen Freilaufelement und Reibelement umgesetzt werden. Das Gewinde kann dabei auf verschiedene Weise ausgebildet sein, beispielsweise als, insbesondere metrisches, Standardgewinde, oder auch als beliebiges Gewinde mit beliebiger Steigung oder dergleichen.

In einer Ausführungsform ist zwischen der Abtriebswelle und dem Reibelement ein vorbestimmter Kraftschluss in Umfangsrichtung der Abtriebswelle ausgebildet. Dies erlaubt eine kompakte und einfache Bauweise des Freilaufs.

Besonders bevorzugt umfasst der Kraftschluss zwischen Abtriebswelle und Reibelement eine Reibungskraft in Umfangsrichtung, insbesondere bezüglich der Abtriebswelle. Das heißt, die Reibungskraft ist in tangentialer Richtung bezüglich der Abtriebswelle ausgerichtet. Insbesondere kann das Reibelement dabei zumindest teilweise als Hohlwelle ausgebildet sein, durch die die Abtriebswelle zumindest teilweise hindurchragt. Beispielsweise kann die Reibungskraft durch eine radiale Haftkraft zwischen Reibelement und Abtriebswelle bewirkt werden. Damit kann die Betätigbarkeit des Wendelmechanismus über die Reibungskraft auf einfache Weise und gezielt eingestellt werden.

Vorzugsweise ist die Reibungskraft mittels mindestens einer Schraube und/oder mittels eines Reibrings erzeugt. Beispielsweise kann die mindestens eine Schraube in das Reibelement eingeschraubt sein und in radialer Richtung gegen die Abtriebswelle drücken mit einer vorbestimmten Schraubkraft. Die Schraubkraft und damit die Reibungskraft kann somit auf besonders einfache Weise erzeugt und eingestellt werden. Besonders vorteilhaft sind mehrere um den Umfang der Abtriebswelle verteilt angeordnete Schrauben. Ein Reibring kann beispielsweise als zusätzliches Element zwischen Reibelement und Abtriebswelle angeordnet sein. Beispielsweise kann die Reibungskraft dabei in Abhängigkeit von Oberflächenrauigkeiten und/oder Passungen zwischen Reibelement und Reibring und/oder zwischen Abtriebswelle und Reibring ausgebildet sein, wodurch ebenfalls eine einfache und kostengünstige Ausgestaltung ermöglicht wird.

Weiter bevorzugt umfasst der Kraftschluss zwischen Abtriebswelle und Reibelement eine Magnetkraft. Das heißt, zwischen Reibelement und Abtriebswelle ist die Magnetkraft derart vorgesehen, dass diese den vorbestimmten Kraftschluss in Umfangsrichtung bewirkt. Beispielsweise können dabei Permanentmagnete an Reibelement und/oder Abtriebswelle angeordnet sein. Damit kann der Kraftschluss ebenfalls auf einfache Weise und besonders gezielt ausgebildet werden.

Besonders bevorzugt umfasst der Freilauf ferner einen Anschlag, der die translatorische Verschiebung des Freilaufelements relativ zum Reibelement begrenzt. Insbesondere ist der Anschlag derart ausgebildet, dass dieser eine Verschiebung des Freilaufelements von der ersten Verzahnung weg begrenzt. Vorzugsweise wird dabei bei Anliegen des Freilaufelements am Anschlag und bei weiterer relativer Rotation von Abtriebswelle und Kurbelwelle der Kraftschluss zwischen Abtriebswelle und Reibelement überwunden, sodass die Abtriebswelle relativ zum Reibelement rotieren kann. Durch den Anschlag kann eine besonders kompakte und konstruktiv genau definierte Ausgestaltung des Freilaufs erfolgen.

Bevorzugt ist der Anschlag am Reibelement ausgebildet. Insbesondere wenn das Reibelement zumindest teilweise als Hohlwelle ausgebildet ist, innerhalb der das Freilaufelement angeordnet ist, kann somit eine besonders einfache und kostengünstige Konstruktion mit wenigen Bauteilen ermöglicht werden. Beispielsweise kann der Anschlag durch einen am inneren Umfang des Reibelements angeordneten Sicherungsring ausgebildet sein.

Vorzugsweise ist der Anschlag derart ausgebildet, dass bei Anliegen des Freilaufelements am Anschlag die beiden Verzahnungen vollständig voneinander ausgerückt sind. Das heißt, der Anschlag erlaubt eine derartige relative translatorische Verschiebung des Freilaufelements zum Reibelement, dass sich bei Erreichen des Anschlags die beiden Verzahnungen nicht mehr berühren. Dadurch kann eine besonders verschleißarme Betriebsweise des Freilaufs sichergestellt werden.

Weiter bevorzugt ist der Wendelmechanismus derart ausgebildet, dass durch die relative translatorische Verschiebung bei einer relativen Rotation von Freilaufelement und Reibelement in Freilaufrichtung der Zahneingriff der beiden Verzahnungen ausgerückt wird. Zudem ist der Wendelmechanismus derart ausgebildet, dass durch die relative translatorische Verschiebung von Freilaufelement und Reibelement zueinander bei einer relativen Rotation in Sperrrichtung der Zahneingriff der Verzahnungen eingerückt wird. Das heißt, bei Rotation in Freilaufrichtung wird eine Drehmomentübertragung zwischen Kurbelwelle und Abtriebswelle aufgehoben und bei Rotation in entgegengesetzte Sperrrichtung ermöglicht.

Bevorzugt ist das Reibelement axial unverschiebbar an der Abtriebswelle befestigt. Insbesondere hinterschneiden sich hierbei Teilbereiche von Abtriebswelle und Reibelement in axialer Richtung. Bevorzugt ist das Reibelement dabei beidseitig axial unverschiebbar an der Abtriebswelle befestigt.

Vorzugsweise ist das Freilaufelement mittels einer Radialverzahnung axial verschiebbar und in Umfangsrichtung unverdrehbar an der Kurbelwelle befestigt. Als Radialverzahnung kann beispielsweise eine Keilwellenverbindung zwischen Freilaufelement und Kurbelwelle ausgebildet sein. Damit kann bei Sicherstellung der Funktion auf einfache Weise eine robuste Drehmomentübertragung zwischen Freilaufelement und Kurbelwelle sichergestellt werden.

Bevorzugt ist das Freilaufelement zweiteilig ausgebildet und weist eine Zahnscheibe und einen Festring auf. Die Zahnscheibe weist dabei die zweite Verzahnung auf. Der Festring weist einen Teil des Wendelmechanismus auf, welcher insbesondere in Eingriff mit dem Reibelement steht. Zahnscheibe und Festring sind dabei drehfest miteinander verbunden. Insbesondere sind Zahnscheibe und Festring fest mechanisch aneinander fixiert. Durch eine zweiteilige Ausgestaltung kann eine einfache Montage ermöglicht werden. Zudem kann beispielsweise durch unterschiedliche Materialien eine besonders gezielte Anpassung der jeweiligen Bereiche des Freilaufelements an die jeweiligen Anforderungen ermöglicht werden.

Alternativ bevorzugt kann das Freilaufelement als ein einstückiges Bauteil ausgebildet sein, das die zweite Verzahnung und den Teil des Wendelmechanismus aufweist.

Vorzugsweise sind die Verzahnungen als Sägezahn-Verzahnungen oder als Hirth-Verzahnungen ausgebildet. Als Sägezahn-Verzahnungen wird eine Verzahnung angesehen, die relativ zu einer Axialrichtung unterschiedlich geneigte Zahnflanken aufweist. Eine der beiden Zahnflanken jedes Zahns kann dabei beispielsweise parallel zur Axialrichtung angeordnet sein. Als Hirth-Verzahnung wird eine Verzahnung mit symmetrischen Zähnen angesehen.

Besonders bevorzugt ist die Abtriebswelle als Hohlwelle ausgebildet. Die Kurbelwelle ist dabei drehbar innerhalb der Abtriebswelle gelagert. Vorzugsweise ist zur drehbaren Lagerung zumindest ein Lager zwischen Kurbelwelle und Abtriebswelle vorgesehen. Beispielsweise kann das Lager für eine in radialer Richtung besonders kompakte Bauweise als ein Nadellager ausgebildet sein.

Weiterhin führt die Erfindung zu einem Fahrzeug, insbesondere einem Zweirad, bevorzugt einem Elektrofahrrad, das den beschriebenen Freilauf umfasst.

Bevorzugt umfasst das Fahrzeug ferner eine Antriebseinheit, welche mit der Abtriebswelle, insbesondere drehmomentübertragend, verbunden ist, und einen Kurbeltrieb, der, insbesondere drehmomentübertragend, mit der Kurbelwelle verbunden ist.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Fahrzeugs mit einem Freilauf gemäß einem bevorzugten Ausführungsbeispiel der Erfindung,
- Figur 2: eine Detail-Schnittansicht eines Antriebs des Fahrzeugs der Figur 1,
- Figur 3: eine perspektivische Ansicht des in Figur 2 dargestellte Antriebs,
- Figur 4: eine Schnittansicht des Freilaufs der Figur 1 im ausgerückten Zustand, und
- Figur 5: eine Schnittansicht des Freilaufs der Figur 1 im eingerückten Zustand.

### Bevorzugte Ausführungsformen der Erfindung

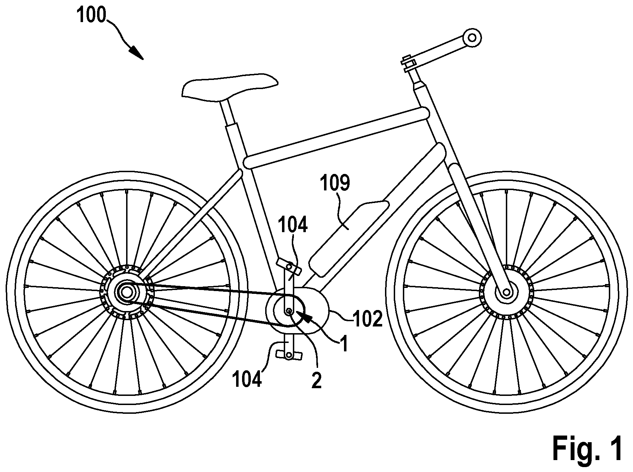

Figur 1 zeigt eine vereinfachte schematische Ansicht eines Fahrzeugs 100, das einen Freilauf 1 gemäß einem bevorzugten Ausführungsbeispiel der Erfindung umfasst. Bei dem Fahrzeug 100 handelt es sich um ein mit Muskelkraft und/oder Motorkraft betreibbares Fahrzeug 100, im Detail um ein Elektrofahrrad.

Das Fahrzeug 100 umfasst eine Antriebseinheit 102, die einen Motor umfasst, der insbesondere ein Elektromotor ist. Der Motor kann mittels eines elektrischen Energiespeichers 109 des Fahrzeugs 100 mit elektrischer Energie versorgt werden.

Die Antriebseinheit 102 ist im Bereich eines Tretlagers des Elektrofahrrads 100 angeordnet. Durch ein mittels des Motors erzeugten Motordrehmoments kann eine durch Muskelkraft erzeugte Tretkraft eines Fahrers des Elektrofahrrads 100 motorisch unterstützt werden.

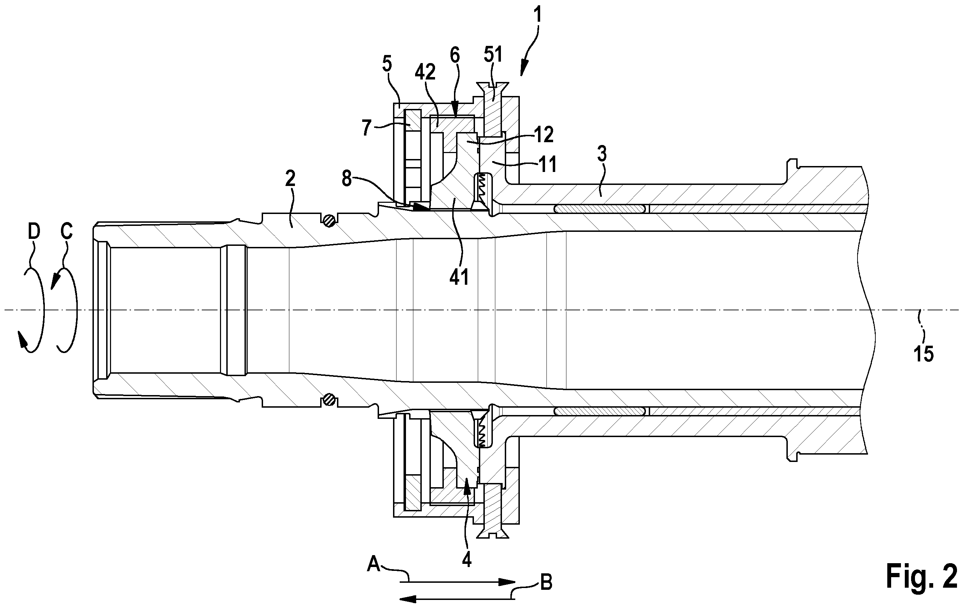

Die Muskelkraft des Fahrers kann dabei über einen Kurbeltrieb 104, welcher Kurbeln umfasst, auf eine Kurbelwelle 2 aufgebracht werden. Die Kurbelwelle 2 erstreckt sich entlang einer Kurbelachse 15 und ist koaxial zu einer Abtriebswelle 3 der Antriebseinheit 102 angeordnet (vgl. Figur 2).

Die Antriebseinheit 102 kann dabei die Abtriebswelle 3 mittels des erzeugten Motordrehmoments antreiben. Die Abtriebswelle 3 ist dabei als Hohlwelle ausgebildet, durch die die Kurbelwelle 2 vollständig hindurchragt. Die Kurbelwelle 2 ist dabei drehbar innerhalb der Abtriebswelle 3 angeordnet.

Zwischen Kurbelwelle 2 und Abtriebswelle 3 ist ein Freilauf 1 vorgesehen, der je nach relativer Rotationseinrichtung von Kurbelwelle 2 und Abtriebswelle 3 eine Drehmomentübertragung zwischen Kurbelwelle 2 und Abtriebswelle 3 herstellen oder unterbrechen kann.

Die genaue Funktionsweise und Ausgestaltung des Freilaufs 1 wird nachfolgend in Bezug auf die Figuren 2 bis 5 im Detail beschrieben.

Der Freilauf 1 umfasst ein Freilaufelement 4 und ein Reibelement 5, welche im Wesentlichen koaxial zu Kurbelwelle 2 und Abtriebswelle 3 angeordnet sind.

Das Freilaufelement 4 ist dabei scheibenförmig ausgebildet und direkt auf einem Außenumfang der Kurbelwelle 2 angeordnet. Mittels einer Radialverzahnung 8, welche beispielsweise in Form einer Keilwellenverbindung ausgebildet sein kann, ist das Freilaufelement 4 in axialer Richtung verschiebbar und in Umfangsrichtung unverdrehbar auf der Kurbelwelle 2 angeordnet.

Das Freilaufelement 4 umfasst an einer axialen Stirnseite eine zweite Stirnverzahnung 12. An der Abtriebswelle 3 ist eine erste Stirnverzahnung 11, insbesondere an einem radial nach außen vorstehenden Flansch der Abtriebswelle 3, ausgebildet. Die erste Stirnverzahnung 11 und die zweite Stirnverzahnung 12 sind eingerichtet, um bei einem Eingriff ineinander eine Drehmomentübertragung zu bewirken.

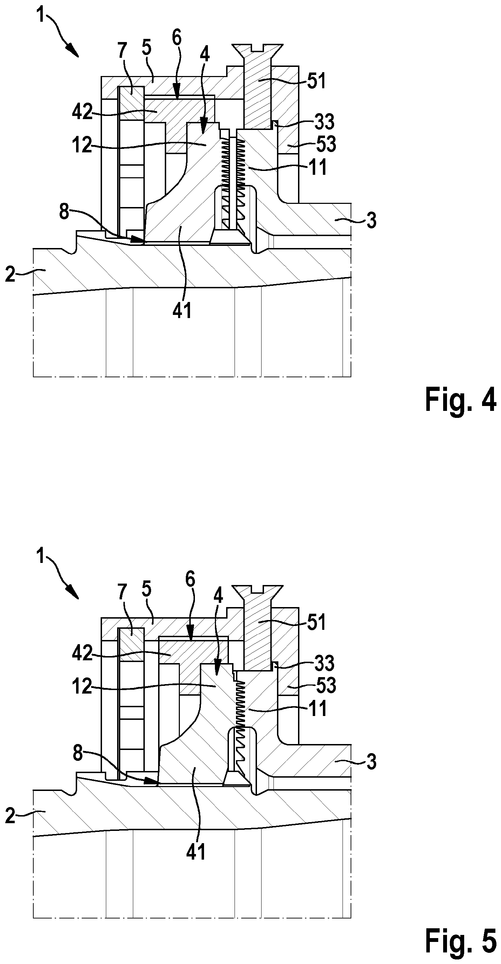

Das heißt, wenn das Freilaufelement 4 in der durch den Pfeil A gekennzeichneten Richtung nach rechts zur ersten Stirnverzahnung 11 verschoben wird bis die beiden Stirnverzahnungen 11, 12 ineinandergreifen, wird eine Drehmomentübertragung zwischen Abtriebswelle 3 und Freilaufelement 4 ermöglicht. Durch die Radialverzahnung 8 zwischen Freilaufelement 4 und Kurbelwelle 2 wird somit ebenfalls eine Drehmomentübertragung zwischen Kurbelwelle 2 und Abtriebswelle 2 über das Freilaufelement 4 ermöglicht. Dieser Zustand, in dem die beiden Stirnverzahnungen 11, 12 ineinandergreifen, wird als eingerückter Zustand der Verzahnung bezeichnet. Der eingerückte Zustand ist in der Figur 5 dargestellt.

Wenn das Freilaufelement 4 in der durch den Pfeil B gekennzeichneten Richtung nach links von der ersten Stirnverzahnung 11 weg verschoben wird, bis die beiden Stirnverzahnungen 11, 12 nicht mehr ineinandergreifen, so wird die Drehmomentübertragung zwischen Abtriebswelle 3 und Freilaufelement 4, und damit auch zwischen Kurbelwelle 2 und Abtriebswelle 3 unterbrochen. Dieser Zustand, in dem die beiden Stirnverzahnungen 11, 12 nicht ineinandergreifen, wird als ausgerückter Zustand der Verzahnung bezeichnet. Der ausgerückte Zustand ist in der Figur 4 dargestellt.

Das Einrücken und Ausrücken der Verzahnung wird somit durch die translatorische Verschiebung des Freilaufelements 4 entlang der Axialrichtung relativ zur Abtriebswelle 3, sowie insbesondere auch relativ zur Kurbelwelle 2, herbeigeführt.

Diese translatorische Verschiebung des Freilaufelements 4 wird dabei in Abhängigkeit einer relativen Rotation von Kurbelwelle 2 und Abtriebswelle 3 in bestimmter Rotationseinrichtung und durch das Reibelement 5 bewirkt, wie nachfolgend beschrieben.

Das Reibelement 5 ist als Hohlwelle oder im Wesentlichen hülsenförmig ausgebildet und radial außerhalb Abtriebswelle 3 und Freilaufelement 4 angeordnet. Das Reibelement 5 ist dabei axial unverschiebbar an der Abtriebswelle 3 befestigt, wobei eine relative Rotation zwischen Reibelement 5 und Abtriebswelle 3 möglich ist. Dabei ist jedoch ein vorbestimmter Kraftschluss in Umfangsrichtung in Form eines Reibschlusses zwischen Reibelement 5 und Abtriebswelle 3 ausgebildet, welcher bewirkt, dass das Reibelement 5 mit der Abtriebswelle 3 mit rotiert, wenn der Kraftschluss nicht überwunden wird.

Das Reibelement 5 weist dabei mehrere um den Umfang der Abtriebswelle 3 gleichmäßig verteilte Schrauben 51 auf, welche durch den hülsenförmigen Grundkörper des Reibelements 5 hindurchragen und in radialer Richtung gegen den Flansch der Abtriebswelle 3, an dem sich die erste Stirnverzahnung 11 befindet, drückt. Durch entsprechende Einstellung des Schraubmoments kann die radiale Kraft und damit die Reibungskraft des Kraftschlusses eingestellt werden.

Die axial unverschiebbare Befestigung des Reibelements 5 an der Abtriebswelle 3 erfolgt dadurch, dass ein radial nach außen vorstehender Absatz 33 am Flansch der Abtriebswelle 3 sich in axialer Richtung mit den Schrauben 51 und einem radial nach innen vorstehenden Absatz 53 des Reibelements 5 hinterschneidet. Mittels der Schrauben 51 kann somit zudem eine besonders einfache Montage des Freilaufs 1 ermöglicht werden.

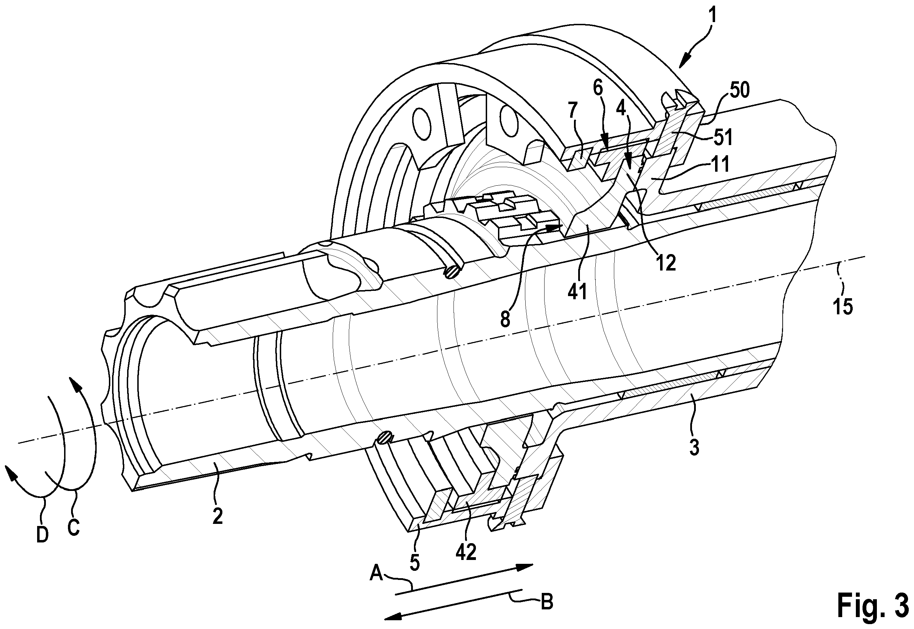

Der Freilauf 1 umfasst zudem einen Wendelmechanismus 6, der zwischen Freilaufelement 4 und Reibelement 5 ausgebildet ist. Der Wendelmechanismus 6 umfasst dabei in dem gezeigten Ausführungsbeispiel ein Gewinde zwischen einer radial inneren Seite des Reibelements 5 und einer radial äußeren Seite des Freilaufelements 4. Das Gewinde des Wendelmechanismus 6 ist dabei derart ausgebildet, dass dieses bei einer relativen Rotation der Kurbelwelle 2 in Sperrrichtung C das Einrücken der Verzahnung, also den Zahneingriff der beiden Stirnverzahnungen 11, 12 durch Verschieben des Freilaufelements 4 in Richtung des Pfeils A bewirkt (vgl. Figur 2 und 3). Analog wird bei einer relativen Rotation der Kurbelwelle 2 in entgegengesetzte Freilaufrichtung D das Ausrücken der Verzahnung, also das Freigeben des Zahneingriffs der beiden Stirnverzahnungen 11, 12 durch Verschieben des Freilaufelements 4 in Richtung des Pfeils B bewirkt.

Der Freilauf 1 umfasst dabei zudem einen Anschlag 7, der die axiale Verschiebung des Freilaufelements 4 relativ zum Reibelement 5 begrenzt. Hierfür umfasst der Anschlag 7 einen Sicherungsring, der in einer Nut an einer radial inneren Seite des hülsenförmigen Reibelements 5 angeordnet ist.

Wenn das Freilaufelement 4 so weit verschoben wird, dass der Anschlag 7 erreicht ist (wie in Figur 4 dargestellt) wird bei weiterer relativer Rotation der Kurbelwelle 2 in Freilaufrichtung D der Kraftschluss zwischen Reibelement 5 und Abtriebswelle 3 überwunden, sodass sich Reibelement 5 und Abtriebswelle 3 relativ zueinander drehen.

In dem gezeigten Ausführungsbeispiel ist das Freilaufelement 4 zweiteilig ausgebildet und umfasst eine Zahnscheibe 41, an der die zweite Stirnverzahnung 12 ausgebildet ist, und einen Festring 42, der einen Teil des Gewindes des Wendelmechanismus 6 aufweist. Die Zahnscheibe 41 und der Festring 42 sind dabei mittels einer festen Verbindung drehfest und unverschiebbar aneinander fixiert.

## Patentansprüche

1. Freilauf eines Fahrzeugs (100), insbesondere eines Zweirads, umfassend:
- eine Kurbelwelle (2),
- eine Abtriebswelle (3), welche eine erste Verzahnung (11) aufweist,
- ein Freilaufelement (4), welches eine zweite Verzahnung (12) aufweist, und
- ein Reibelement (5),
- wobei die erste Verzahnung (11) und die zweite Verzahnung (12) eingerichtet sind, um bei einem Eingriff ineinander eine Drehmomentübertragung zwischen der Abtriebswelle (3) und dem Freilaufelement (4) zu bewirken,
- wobei das Freilaufelement (4) in axialer Richtung verschiebbar auf der Kurbelwelle (2) angeordnet ist,
- wobei das Freilaufelement (4) in Umfangsrichtung unverdrehbar relativ zur Kurbelwelle (2) angeordnet ist, und
- wobei das Freilaufelement (4) und das Reibelement (5) mittels eines Wendelmechanismus (6) miteinander verbunden sind, welcher eingerichtet ist, um bei einer relativen Rotation von Freilaufelement (4) und Reibelement (5) zueinander eine translatorische Verschiebung von Freilaufelement (4) und Reibelement (5) relativ zueinander zu bewirken.

2. Freilauf nach Anspruch 1, wobei der Wendelmechanismus (6) ein Gewinde umfasst.

3. Freilauf nach einem der vorhergehenden Ansprüche, wobei zwischen der Abtriebswelle (3) und dem Reibelement (5) ein vorbestimmter Kraftschluss in Umfangsrichtung ausgebildet ist.

4. Freilauf nach Anspruch 3, wobei der Kraftschluss zwischen Abtriebswelle (3) und Reibelement (5) eine Reibungskraft in Umfangsrichtung umfasst.

5. Freilauf nach Anspruch 4, wobei die Reibungskraft mittels mindestens einer Schraube und/oder mittels eines Reibrings erzeugt ist.

6. Freilauf nach einem der vorhergehenden Ansprüche, wobei der Kraftschluss zwischen Abtriebswelle (3) und Reibelement (5) eine Magnetkraft umfasst.

7. Freilauf nach einem der vorhergehenden Ansprüche, ferner umfassend einen Anschlag (7), der die translatorische Verschiebung des Freilaufelements (4) relativ zum Reibelement (5) begrenzt.

8. Freilauf nach Anspruch 7, wobei der Anschlag (7) am Reibelement (5) ausgebildet ist.

9. Freilauf nach Anspruch 7 oder 8, wobei der Anschlag (7) derart ausgebildet ist, dass bei Anliegen des Freilaufelements (4) am Anschlag (7) die Verzahnungen (11, 12) vollständig voneinander ausgerückt sind.

10. Freilauf nach einem der vorhergehenden Ansprüche, wobei der Wendelmechanismus (6) derart ausgebildet ist, dass die entsprechende relative translatorische Verschiebung bei einer relativen Rotation in Freilaufrichtung den Zahneingriff der Verzahnungen (11, 12) ausrückt, und bei relativer Rotation in Sperrrichtung den Zahneingriff der Verzahnungen (11, 12) einrückt.

11. Freilauf nach einem der vorhergehenden Ansprüche, wobei das Reibelement (5) axial unverschiebbar an der Abtriebswelle (3) befestigt ist.

12. Freilauf nach einem der vorhergehenden Ansprüche, wobei das Freilaufelement (4) mittels einer Radialverzahnung (8) axial verschiebbar und in Umfangsrichtung unverdrehbar an der Kurbelwelle (2) befestigt ist.

13. Freilauf nach einem der vorhergehenden Ansprüche, wobei das Freilaufelement (4) zweiteilig ausgebildet ist mit einer Zahnscheibe (41) die die zweite Verzahnung (12) aufweist, und mit einem Festring (42), der einen Teil des Wendelmechanismus (6) aufweist, und wobei Zahnscheibe (41) und Festring (42) drehfest miteinander verbunden sind.

14. Freilauf nach einem der vorhergehenden Ansprüche, wobei die Abtriebswelle (3) als Hohlwelle ausgebildet ist, und wobei die Kurbelwelle (2) drehbar innerhalb der Abtriebswelle (3) gelagert ist.

15. Fahrzeug, insbesondere Elektrofahrrad, umfassend einen Freilauf (1) nach einem der vorhergehenden Ansprüche.

16. Fahrzeug nach Anspruch 15, ferner umfassend eine Antriebseinheit (102), welche mit der Abtriebswelle (3) verbunden ist, und einen Kurbeltrieb (104), welcher mit der Kurbelwelle (2) verbunden ist.
